(19) Europäisches Patentamt
European Patent Office
Office européen des brevets

(11) **EP 3 715 090 B1**

(12) **EUROPEAN PATENT SPECIFICATION**

(45) Date of publication and mention
of the grant of the patent:
**11.05.2022 Bulletin 2022/19**

(21) Application number: **20166234.3**

(22) Date of filing: **27.03.2020**

(51) International Patent Classification (IPC):
**B29C 48/92** (2019.01)      *B29C 48/10* (2019.01)
*B29C 48/00* (2019.01)      *B29C 48/28* (2019.01)
*B29C 48/35* (2019.01)      *B29C 48/91* (2019.01)
*B29C 48/88* (2019.01)

(52) Cooperative Patent Classification (CPC):
**B29C 48/92;** B29C 48/0018; B29C 48/0019;
B29C 48/10; B29C 48/28; B29C 48/355;
B29C 48/885; B29C 48/913; B29C 2948/92028;
B29C 2948/92133; B29C 2948/92152;
B29C 2948/92247; B29C 2948/92295;
B29C 2948/92428; B29C 2948/92438;      (Cont.)

(54) **INFLATION MOLDING DEVICE**

AUFBLASFORMVORRICHTUNG

DISPOSITIF DE MOULAGE PAR GONFLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2019 JP 2019060879**

(43) Date of publication of application:
**30.09.2020 Bulletin 2020/40**

(73) Proprietor: **Sumitomo Heavy Industries, Ltd.
Tokyo 141-6025 (JP)**

(72) Inventor: **FUJIWARA, Kazumasa
Kanagawa, 237-8555, (JP)**

(74) Representative: **Louis Pöhlau Lohrentz
Patentanwälte
Postfach 30 55
90014 Nürnberg (DE)**

(56) References cited:
**JP-A- H05 345 353      JP-A- H07 117 101
US-A- 5 104 593      US-A- 5 891 383
US-B1- 6 293 778**

(52) Cooperative Patent Classification (CPC): (Cont.)
B29C 2948/92485; B29C 2948/92514;
B29C 2948/926; B29C 2948/92904;
B29C 2948/92923; B29C 2948/9298

**Description**

BACKGROUND OF THE INVENTION

Field of the Invention

The present invention relate to an inflation molding device.

Description of Related Art

Inflation molding is known in which a melted resin is extruded in a tubular shape from a die, and air is blown into the resin so that the resin is inflated and molded in a thin film shape. In the related art, a technique has been proposed in which a thickness of the resin is controlled to fall within a target range by adjusting a lip width, a cooling air amount, and an air temperature.

Japanese Unexamined Patent Publication No. 2017-177348 is an example of the related art.

Furthermore, document US 5 104 593 A discloses an inflation moulding device with a determination unit using two controller means, the device comprising:

an acquisition unit that acquires data relating to a tubular resin extruded from a die; and

a determination unit that estimates stress generated in the tubular resin, based on the data acquired by the acquisition unit , compares the estimated stress with a predetermined threshold value, and determines whether or not the tubular resin has a possibility of breakage.

Further prior art is disclosed in the US 5 891 383 A, US 6 293 778 B1, JP H07 117101 A and JP H05 345353.

SUMMARY OF THE INVENTION

In the related art, there is a phenomenon in which a resin is broken during molding. In a case of breakage, an inflation molding device has to start up again, thereby degrading working efficiency. Moreover, the resin is wasted.

It is desirable to provide an inflation molding device capable of suppressing breakage of the resin.

The solutions for this requirement that are provided by the present invention are defined in the independent claims.

According to the aspects of the present invention, it is possible to provide the inflation molding device capable of suppressing breakage of the resin.

BRIEF DESCRIPTION OF THE DRAWINGS

Fig. 1 is a view illustrating a schematic configuration of an inflation molding device according to an embodiment.
Fig. 2 is a block diagram schematically illustrating a function and a configuration of a control device in Fig. 1.
Fig. 3 is a flowchart illustrating an operation of the inflation molding device in Fig. 1 with regard to bubble breakage determination during setting.
Fig. 4 is a flowchart illustrating an operation of the inflation molding device in Fig. 1 with regard to bubble breakage determination during molding.

DETAILED DESCRIPTION OF THE INVENTION

Hereinafter, embodiments according to the present invention will be described in detail with reference to the drawings. In the description of the drawings, the same reference numerals will be assigned to the same elements, and repeated description will be omitted as appropriate.

In inflation molding, a resin extruded in a tubular shape from a die may be broken in some cases. A cause of breakage is considered that a force applied to the resin is greater than breakage strength of the resin. Therefore, in the present embodiment, for example, it is periodically determined whether or not stress having a possibility of causing breakage is generated in the tubular resin. Specifically, the stress generated in the resin is estimated, based on data relating to the tubular resin acquired during molding. In a case where the estimated stress is equal to or greater than a threshold value, it is determined that the resin has a possibility of breakage. In this manner, in a case where a bubble has a possibility of breakage, a user can promptly detect the possibility to take a prompt measure.

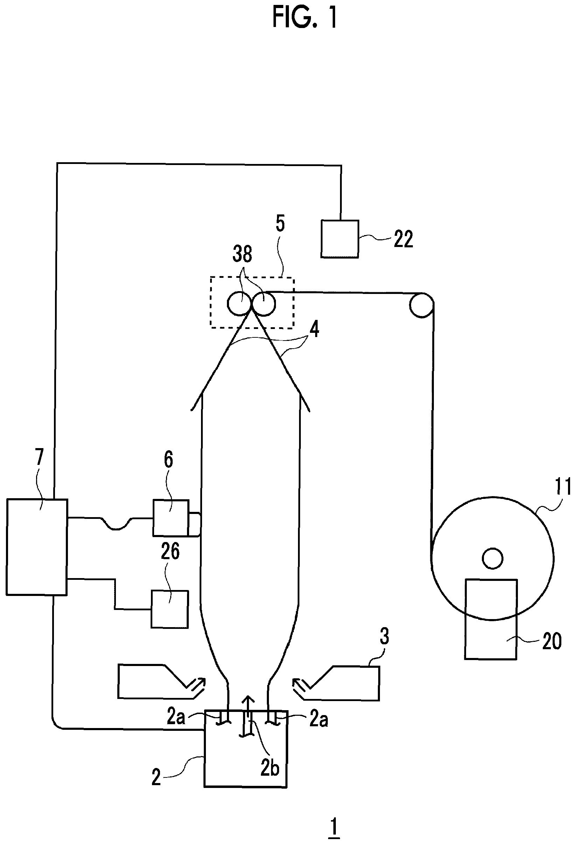

Fig. 1 illustrates a schematic configuration of an inflation molding device 1 according to an embodiment. The inflation molding device 1 includes a die 2, a cooling device 3, a pair of stabilizer plates 4, a pulling machine 5, a thickness acquisition unit 6, a width acquisition unit 22, a frost line height acquisition unit 26, and a control device 7.

A molten resin supplied from an extruding machine (not illustrated) is extruded from a ring-shaped discharge port 2a formed in the die 2. At this time, air is ejected into the extruded resin from an air ejecting port 2b formed in a central portion of the die 2, thereby molding a thin resin film (hereinafter, also referred to as a "bubble") bulging into a tubular shape.

The cooling device 3 is disposed above the die 2. The cooling device 3 cools the bubble by blowing cooling air to the bubble.

The pair of stabilizer plates 4 is disposed above the cooling device 3, and guides the bubble to the pulling machine 5. The pulling machine 5 is disposed above the stabilizer plate 4. The pulling machine 5 includes a pair of pinch rolls 38. The pair of pinch rolls 38 is rotationally driven by a motor (not illustrated), and is folded flat while the guided bubble is pulled up. A winding machine 20 winds the folded resin film to form a film roll body 11.

The thickness acquisition unit 6 is disposed between the cooling device 3 and the stabilizer plate 4. The thickness acquisition unit 6 acquires (measures) a thickness of the bubble at each position in a circumferential direction while rotating around the bubble. Thickness data acquired by the thickness acquisition unit 6 is transmitted to the control device 7.

The width acquisition unit 22 is disposed between the pulling machine 5 and the winding machine 20. The width acquisition unit 22 acquires (measures) a film width of the folded resin film. Width data acquired by the width acquisition unit 22 is transmitted to the control device 7.

The frost line height acquisition unit 26 is disposed between the cooling device 3 and the stabilizer plate 4. The frost line height acquisition unit 26 detects a frost line height at each position in the circumferential direction while rotating around the bubble. The frost line height is a height from the discharge port 2a of the die 2 to a frost line which is a position where the resin solidifies. A configuration of the frost line height acquisition unit 26 is not particularly limited. For example, the frost line height acquisition unit 26 may be configured to include a visible light camera that images an external appearance of the film so as to include the discharge port 2a and the frost line, and an image processing unit that specifies the frost line height by performing image processing on the captured image. For example, the frost line height acquisition unit 26 may be configured to include an infrared sensor that captures a thermal image of the film, and an image processing unit that specifies the frost line height by performing image processing on the captured thermal image. A detection result acquired by the frost line height acquisition unit 26 is transmitted to the control device 7.

The control device 7 integrally controls the inflation molding device 1.

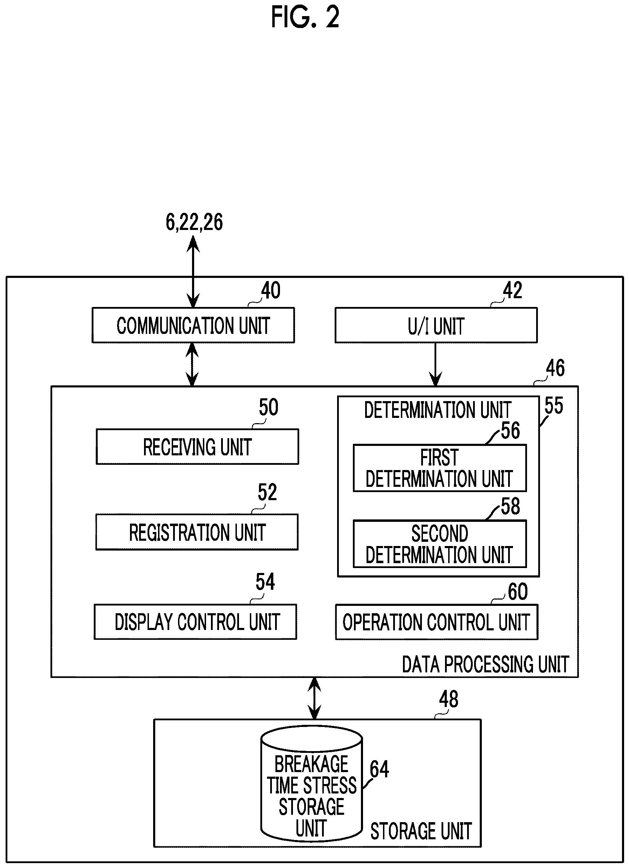

Fig. 2 is a block diagram schematically illustrating a function and a configuration of the control device 7. Each block illustrated here can be realized in terms of hardware by elements such as a CPU of a computer or a mechanical device, and can be realized in terms of software by a computer program. Here, the drawing illustrates a functional block realized in cooperation of the hardware and the software. Therefore, those skilled in the art will understand that the functional block can be realized in various forms by a combination of the hardware and the software.

The control device 7 includes a communication unit 40 that performs a communication process with the thickness acquisition unit 6 and the frost line height acquisition unit 26 in accordance with various communication protocols, a U/I unit 42 that receives an operation input from a user to display various screens on a display unit, a data processing unit 46 that performs various types of data processing, based on data acquired from the communication unit 40 and the U/I unit 42, and a storage unit 48 that stores data updated with reference to the data processing unit 46.

The storage unit 48 includes a breakage time stress storage unit 64. The breakage time stress storage unit 64 stores information relating to the stress generated in the bubble when the bubble is broken in past molding. The information relating to the stress may be the stress itself, or may be information for calculating the stress.

The data processing unit 46 includes a receiving unit 50, a registration unit 52, a display control unit 54, a first determination unit 56, a second determination unit 58, and an operation control unit 60.

The receiving unit 50 receives a thickness of the bubble, a film width of the resin film, and a frost line height from each of the thickness acquisition unit 6, the width acquisition unit 22, and the frost line height acquisition unit 26.

The determination unit 55 determines whether or not the bubble has a possibility of breakage. The determination unit 55 includes a first determination unit 56 and a second determination unit 58.

Based on a design value, a set value of the inflation molding device 1, and characteristics of the resin to be used in the inflation molding device 1 relating to the molding, the first determination unit 56 estimates the stress generated in the bubble in a case where the molding is performed using the design value, the set value, and the resin. A method of estimating the stress by the first determination unit 56 will be described later.

Based on the estimated stress, the first determination unit 56 determines whether or not the bubble has a possibility of breakage. Specifically, the first determination unit 56 compares the estimated stress with a first threshold value, determines that the bubble has the possibility of breakage, in a case where the estimated stress is equal to or greater than the first threshold value, and determines that the bubble has no possibility of breakage, in a case where the estimated stress is smaller than the first threshold value. For example, the first threshold value is determined, based on information relating to the stress which is stored in the breakage time stress storage unit 64. For example, the first threshold value may be breakage time stress itself. Alternatively, for example, the first threshold value may be a value obtained by multiplying the breakage time stress by a safety factor. For example, the first threshold value may be determined, based on resin characteristics of the resin to be used.

In a case where the first determination unit 56 determines that the bubble has the possibility of breakage, the first determination unit 56 warns (notifies) a user of the possibility by using a screen display via the display control unit 54, for example. Without being limited to the screen display, the warning may be issued using a voice output or other methods. In this case, the user may change various set values (for example, a resin extrusion amount, a blow ratio, a pulling speed, a die outlet temperature, an atmospheric temperature, a lip width, or a temperature of cooling air).

The second determination unit 58 estimates the stress generated in the bubble during the molding, based on the data received by the receiving unit 50 or the design value (for example, a radius of the discharge port 2a of the die 2 or a radius of the pinch roll 38) of the inflation molding device 1 relating to the molding. A method of estimating the stress by the second determination unit 58 will be described later.

The second determination unit 58 determines whether or not the bubble has the possibility of breakage, based on the estimated stress. Specifically, the second determination unit 58 compares the estimated stress with a second threshold value, determines that the bubble has the possibility of breakage, in a case where the estimated stress is equal to or greater than the second threshold value, and determines that the bubble has no possibility of breakage, in a case where the estimated stress is smaller than the second threshold value. For example, the second threshold value is determined, based on the information relating to the stress which is stored in the breakage time stress storage unit 64. For example, the second threshold value may be the breakage time stress itself. Alternatively, for example, the second threshold value may be a value obtained by multiplying the breakage time stress by the safety factor. For example, the second threshold value may be determined, based on the resin characteristics of the resin to be used. The second threshold value may be the same as or different from the first threshold value.

In a case where the second determination unit 58 determines that the bubble has the possibility of breakage, the second determination unit 58 warns (notifies) the user of the possibility by using a screen display via the display control unit 54, for example. Without being limited to the screen display, the warning may be issued using a voice output or other methods. In this case, the user may review and appropriately change various set values, before the bubble is actually broken.

The display control unit 54 controls the screen display. For example, in a case where each of the determination units 56 and 58 determines that the bubble has the possibility of breakage, the display control unit 54 displays the possibility on the screen. For example, the display control unit 54 displays an input screen for inputting various set values.

When the bubble is broken, for example, in response to an instruction from the user, the registration unit 52 causes the breakage time stress storage unit 64 to store information relating to the stress generated in the bubble, for example, the stress estimated immediately before the bubble is broken. In a case where the information relating to the stress is previously stored in the breakage time stress storage unit 64, the registration unit 52 may update the information relating to the stress which is stored in the breakage time stress storage unit 64, in a case where current stress is lower than previous stress.

The operation control unit 60 controls an operation of the inflation molding device 1 in accordance with various set values determined by the user. For example, in a case where the operation control unit 60 receives a molding start instruction from the user, when the first determination unit 56 determines that the bubble has the possibility of breakage, the operation control unit 60 does not start the molding, and warns the user of the possibility. That is, in a case where the first determination unit 56 determines that the bubble has the possibility of breakage, where the operation control unit 60 prohibits molding start. On the other hand, when the first determination unit 56 determines that the bubble has no possibility of breakage, the operation control unit 60 controls the operation of the inflation molding device 1 so as to start the molding. That is, in a case where it is determined that the bubble has no possibility of breakage, the molding start is allowed. Specifically, the operation control unit 60 controls the operation such as the amount of the resin extruded from an extruding machine (not illustrated), a flow rate of the air ejected from the air ejecting port 2b, a temperature of the cooling air blown to the bubble from the cooling device 3, and a drive current flowing in a motor that drives the pinch roll 38. The user may set and change various set values so that the thickness of the bubble which is acquired by the thickness acquisition unit 6 falls within a target range. The user may set and change various set values with reference to a determination result of the second determination unit 58.

Subsequently, a method of estimating the stress by the first determination unit 56 will be described.

The stress ($\sigma$) generated in the bubble (particularly, a frost line thereof) is calculated by Equation (1) below.

$$\sigma = 4_{\eta\varepsilon} \quad (1)$$

Here,

η: viscosity
ε: strain rate

In the present embodiment, it is assumed that Equation (2) below is established for the strain rate (ε).

$$\varepsilon = (v_f - v_d) / L \quad (2)$$

Here,

$v_f$: pulling speed which is a speed for pulling the bubble
$v_d$: flow velocity of the resin in the discharge port 2a
L: frost line height

Therefore, Equation (1) can be rewritten as Equation (3) below.

$$\sigma = 4_\eta \times (v_f - v_d) / L \quad (3)$$

That is, the stress (σ) can be estimated, based on the data relating to the bubble, specifically, based on the viscosity (η), the pulling speed ($v_f$), the flow velocity ($v_d$) of the resin in the discharge port 2a, and the frost line height (L).
The viscosity (η) may be estimated using a known technique. For example, the viscosity (η) may be estimated by measuring the viscosity of the resin to be used in advance and performing fitting by using a viscosity model formula. For example, a power-law model may be used for the viscosity model formula.
The pulling speed ($v_f$) is the set value.
The flow velocity ($v_d$) of the resin in the discharge port 2a is represented by Equation (4) below.

$$v_d = (m / \rho_{melt}) / (2\pi R_0 H_0) \quad (4)$$

Here,

m: resin extrusion amount (mass flow rate)
$\rho_{melt}$: resin melt density
$R_0$: radius of the discharge port 2a of the die 2
$H_0$: Lip width

The resin extrusion amount (m) and the lip width ($H_0$) are set values, the resin melt density ($\rho_{melt}$) is a resin characteristic, and the radius ($R_0$) of the discharge port 2a of the die 2 is a design value.
The frost line height (L) is represented by Equation (5) below.

$$L = mC_p / HTC \times \ln \{- (T_{die} - T_{air}) / (- T_{solid} + T_{air})\} \times 1 /$$

$$(2\pi y)\} \quad (5)$$

Here,

$C_p$: specific heat capacity of the resin
HTC: heat transfer coefficient of the resin
$T_{die}$: exit temperature of the die 2
$T_{air}$: temperature of the cooling air (ambient temperature)
$T_{solid}$: solidification temperature of the resin
y: average radius of the bubble

The specific heat capacity ($C_p$) of the resin and the solidification temperature ($T_{solid}$) of the resin are resin characteristics, and the exit temperature ($T_{die}$) and the ambient temperature ($T_{air}$) of the die 2 are set values. The heat transfer coefficient (HTC) may be obtained in advance by an experiment for each of the amount and the temperature of the cooling air blown from the cooling device 3.

In actual molding, the amount and the temperature of the cooling air are often adjusted so that the frost line height is a height desired by the user. In this case, the frost line height (L) may be set as the set value.

The average radius (y) of the bubble is represented by Equation (6) below.

$$y = (BUR + 1) \times R_0 / 2 \quad (6)$$

Here,
BUR: blow ratio

The blow ratio (BUR) is the set value, and the radius ($R_0$) of the discharge port 2a of the die 2 is the design value.

Subsequently, a method of estimating the stress by the second determination unit 58 will be described.

As described above, the stress generated in the bubble (particularly, a frost line thereof) is calculated by Equation (1). Equation (1) will be presented again below.

$$\sigma = 4\eta\varepsilon \quad (1)$$

In the present embodiment, the viscosity ($\eta$) is assumed to satisfy the following equation (7). That is, the viscosity ($\eta$) is simply calculated without considering influence of the temperature.

$$\eta = FL / \{8\pi R_f H_f (v_f - v_d)\} \quad (7)$$

Here,

F: pulling force
$R_f$: radius of the bubble in the frost line
$H_f$: thickness of the bubble in the frost line

As described above, in the present embodiment, it is assumed that Equation (2) is established for the strain rate ($\varepsilon$). Equation (2) will be presented again below.

$$\varepsilon = (v_f - v_d) / L \quad (2)$$

Therefore, Equation (1) can be rewritten as Equation (8) below, based on Equations (2) and (7).

$$\sigma = F / \{2\pi R_f H_f\} \quad (8)$$

That is, the stress ($\sigma$) can be estimated, based on the data relating to the bubble which is acquired during the molding, specifically, based on the pulling force (F), the radius of the bubble in the frost line ($R_f$), and the thickness of the bubble in the frost line ($H_f$).

The pulling force (F) is represented by Equation (9) below.

$$F = T / R_r \quad (9)$$

Here,

T: Torque
Rr: radius of the pinch roll 38

The torque (T) can be specified by detecting the drive current flowing in the motor that drives the pinch roll 38. The radius ($R_r$) of the pinch roll 38 is the design value, and can be specified by actual measurement.

The radius ($R_f$) of the bubble in the frost line is represented by Equation (10) below.

$$R_f = w / \pi \quad (10)$$

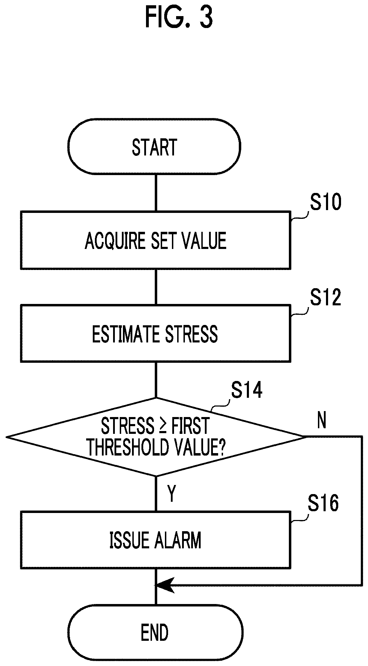

Here,
w: film width [m]
The film width (w) is measured by the width acquisition unit 22.
The thickness ($H_f$) of the bubble in the frost line is acquired by the thickness acquisition unit 6.
Hitherto, the configuration of the inflation molding device 1 has been described. Subsequently, an operation will be described.
First, an operation for determining bubble breakage during the setting will be described. Fig. 3 is a flowchart illustrating an operation of the inflation molding device 1 with regard to bubble break determination during the setting. A flow in Fig. 3 is performed each time the set value is set or changed.
The control device 7 acquires the set value of the inflation molding device 1 relating to the molding which is input by the user on the input screen, for example, the following set value (S10).

- resin extrusion amount (mass flow rate) (m)
- blow ratio (BUR)
- pulling speed ($v_f$)
- exit temperature of the die 2 ($T_{die}$)
- temperature of the cooling air ($T_{air}$)
- lip width ($H_0$)

The control device 7 estimates the stress generated in the bubble in a case of the molding, based on the design value of the inflation molding device 1, the set value input to the input screen, and the characteristics of the resin to be used (S12) . The control device 7 compares the estimated stress with the first threshold value (S14) . In a case where the estimated stress is equal to or greater than the first threshold value (Y in S14), there is the possibility of breakage. Accordingly, the control device 7 warns the user by using the screen display, the voice output, or the other methods so as to change the set value (S16), and the flow is completed. In this case, the molding start is prohibited. In a case where the estimated stress is smaller than the first threshold value (N in S14), the process in S16 is skipped, and the flow is completed. In this case, the molding start is allowed.
Subsequently, an operation for bubble breakage determination during the molding will be described.

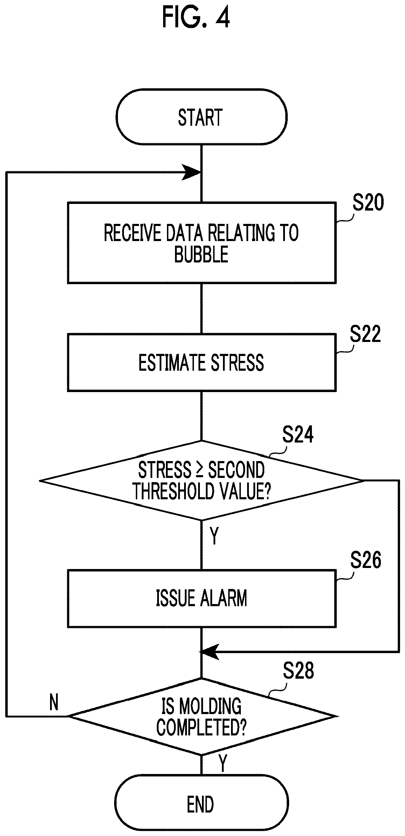

Fig. 4 a flowchart illustrating the operation of the inflation molding device in Fig. 1 with regard to the bubble breakage determination during the molding. The flow in Fig. 4 is performed when the molding starts.
The control device 7 receives the data relating to the bubble from the respective acquisition units (S20) . The control device 7 estimates the stress generated in the bubble during the molding, based on the received data and the design value of the inflation molding device 1 (S22). The control device 7 compares the estimated stress with the second threshold value (S24). In a case where the estimated stress is equal to or greater than the second threshold value (Y in S24), there is the possibility of breakage. Accordingly, the control device 7 warns the user by using screen display, the voice output, or the other methods so as to adjust various adjustment elements (S26) . In a case where the estimated stress is smaller than the second threshold value (N in S24), the process in S26 is skipped. In a case where the molding is completed (Y in S28), the control device 7 completes the flow. In a case where the molding is not completed (N in S28), the process returns to S20.
According to the present embodiment described above, it is determined whether or not stress having the possibility of breakage is generated in the bubble. In this manner, in a case where the bubble has the possibility of breakage, the user can promptly detect the possibility to take a prompt measure.
According to the present embodiment, in a case where the molding is performed using the input set value, it is determined whether or not the bubble has the possibility of breakage. In this manner, it is possible to suppress the set value that causes the bubble to have the possibility of breakage.
Hitherto, the configuration and the operation of the inflation molding device according to the embodiment have been described. The embodiments are merely examples.

Modification Example 1

A method of estimating the stress by the second determination unit 58 is not limited to that according to the embodiment.
The stress ($\sigma$) generated in the bubble (particularly, a frost line thereof) can also be calculated by Equation

(11) below.

$$\sigma = F / S \quad (11)$$

Here,

S: Cross-sectional area of the bubble

The cross-sectional area (S) of the bubble is represented by Equation (12) below.

$$S = 2\pi R_0 H_0 \quad (12)$$

Therefore, Equation (11) can be rewritten as Equation (13) below.

$$\sigma = F / (2\pi R_0 H_0) \quad (13)$$

As described above, the lip width ($H_0$) is the set value, and the radius ($R_0$) of the discharge port 2a of the die 2 is the design value.

Any desired combination of the above-described embodiments and modification examples is also useful as an embodiment of the present invention as far as it is within the scope of the claims. A new embodiment generated by the combination has advantageous effects of the respectively combined embodiment and modification examples.

Brief Description of the Reference Symbols

1:      Inflation molding device
6:      thickness acquisition unit
7:      control device
10:     die
26:     frost line height acquisition unit
55:     determination unit
56:     first determination unit
58:     second determination unit

**Claims**

1.  An inflation molding device (1) comprising:

    an acquisition unit (6, 22, 26) that is configured to acquire data relating to a tubular resin extruded from a die (10) ;
    a data processing unit (46) comprising:

        a receiving unit (50) that is configured to receive data from the acquisition unit (6, 22, 26);
        an operation control unit (60) that is configured to control an operation of the inflation molding device (1) in accordance with set values determined by a user;
        a determination unit (55) that includes a first determination unit (56) and a second determination unit (58), wherein

            a) the first determination unit (56) is configured to estimate stress generated in a tubular resin, based on a design value, a set value of the inflation molding device (1), and characteristics of a resin to be used in the inflation molding device (1) relating to a molding, in a case where the molding is performed using the design value, the set value, and the resin, to compare the estimated stress with a predetermined first threshold value, to determine that the tubular resin has a possibility of breakage, in a case where the estimated stress is equal to or greater than the first threshold value, and to warn a user of the possibility of breakage;
            b) the second determination unit (58) is configured to estimate stress generated in the tubular resin, based on the data acquired by the acquisition unit (6, 22, 26) and received by the receiving unit (50), to compare the estimated stress with a predetermined second threshold value, to determine that the tubular resin has a possibility of breakage, in a case where the estimated stress is equal to or greater than the second threshold value, and to warn a user of the possibility of breakage.

**2.** The inflation molding device (1) according to claim 1,
wherein the threshold value is set, based on information relating to the stress generated in the tubular resin, when the tubular resin is broken in past molding.

**Patentansprüche**

**1.** Blasformvorrichtung (1), umfassend:

eine Erfassungseinheit (6, 22, 26), die konfiguriert ist, um Daten in Bezug auf ein rohrförmiges Harz zu erfassen, das aus einer Austrittsdüse (10) extrudiert wird;
eine Datenverarbeitungseinheit (46), umfassend:

eine Empfangseinheit (50), die konfiguriert ist, Daten aus der Erfassungseinheit (6, 22, 26) zu empfangen;
eine Bediensteuerungseinheit (60), die konfiguriert ist, einen Betrieb der Blasformvorrichtung (1) gemäß eingestellten Werten zu steuern, die durch einen Nutzer bestimmt werden;
eine Bestimmungseinheit (55), die eine erste Bestimmungseinheit (56) und eine zweite Bestimmungseinheit (58) umfasst, wobei

a) die erste Bestimmungseinheit (56) konfiguriert ist, Spannung, die in einem rohrförmigen Harz erzeugt wird, basierend auf einem Bemessungswert, einem Einstellungswert der Blasformvorrichtung (1) und Eigenschaften eines in der Blasformvorrichtung (1) zu verwendenden Harzes in Bezug auf ein Formen zu schätzen, in einem Fall, bei dem das Formen unter Verwendung des Bemessungswerts, des Einstellungswerts und des Harzes durchgeführt wird, die geschätzte Spannung mit einem vorgegebenen ersten Schwellenwert zu vergleichen, zu bestimmen, dass das rohrförmige Harz eine Bruchmöglichkeit aufweist, in einem Fall, bei dem die geschätzte Spannung gleich oder größer als der erste Schwellenwert ist, und einen Nutzer vor der Bruchmöglichkeit zu warnen;
b) die zweite Bestimmungseinheit (58) konfiguriert ist, Spannung, die in dem rohrförmigen Harz erzeugt wird, basierend auf den Daten zu schätzen, die von der Erfassungseinheit (6, 22, 26) erfasst und von der Empfangseinheit (50) empfangen werden, die geschätzte Spannung mit einem vorbestimmten zweiten Schwellenwert zu vergleichen, zu bestimmen, dass das rohrförmige Harz eine Bruchmöglichkeit aufweist, in einem Fall, bei dem die geschätzte Spannung gleich oder größer als der zweite Schwellenwert ist, und einen Nutzer über die Bruchmöglichkeit zu warnen.

**2.** Blasformvorrichtung (1) nach Anspruch 1,
wobei der Schwellenwert basierend auf Informationen in Bezug auf die Spannung, die in dem rohrförmigen Harz erzeugt wird, eingestellt wird, wenn das rohrförmige Harz bei vorherigem Formen gebrochen ist.

**Revendications**

**1.** Un dispositif de moulage par gonflement (1) comprenant :

une unité d'acquisition (6, 22, 26) qui est configurée pour acquérir des données concernant une résine tubulaire extrudée depuis une filière (10) ;
une unité de traitement de données (46) comprenant :

une unité de réception (50) qui est configurée pour recevoir des données provenant de l'unité d'acquisition (6, 22, 26) ;
une unité de commande de fonctionnement (60) qui est configurée pour commander une fonction du dispositif de moulage par gonflement (1) conformément à des valeurs définies déterminées par un utilisateur ;
une unité de détermination (55) qui comprend une première unité de détermination (56) et une deuxième unité de détermination (58), dans lequel

a) la première unité de détermination (56) est configurée pour estimer la contrainte générée dans une résine tubulaire, sur la base d'une valeur de conception, une valeur définie du dispositif de moulage par gonflement (1), et les caractéristiques d'une résine devant être utilisée dans le dispositif de moulage par gonflement (1) en relation avec un moulage, dans un cas où le moulage est effectué en utilisant la valeur de conception, la valeur définie, et la résine, pour comparer la contrainte estimée à une première valeur de seuil prédéterminée, pour déterminer que la résine tubulaire a une possibilité de rupture, dans un cas où la contrainte estimée est égale ou supérieure à la première valeur de seuil, et pour avertir un utilisateur de la possibilité de rupture ;

b) la deuxième unité de détermination (58) est configurée pour estimer la contrainte générée dans la résine tubulaire, sur la base des données acquises par l'unité d'acquisition (6, 22, 26) et reçues par l'unité de réception (50), pour comparer la contrainte estimée à une deuxième valeur de seuil prédéterminée, pour déterminer que la résine tubulaire a une possibilité de rupture, dans un cas où la contrainte estimée est égale ou supérieure à la deuxième valeur de seuil, et pour avertir un utilisateur de la possibilité de rupture.

2. Dispositif de moulage par gonflement (1) selon la revendication 1,
dans lequel la valeur de seuil est définie, sur la base d'informations concernant la contrainte générée dans la résine tubulaire, lorsque la résine tubulaire est rompue dans le moulage passé.

# FIG. 1

# FIG. 2

6,22,26

| 40 | 42 |
|---|---|
| COMMUNICATION UNIT | U/I UNIT |

46

DETERMINATION UNIT 55

50
RECEIVING UNIT

56
FIRST DETERMINATION UNIT

52
REGISTRATION UNIT

58
SECOND DETERMINATION UNIT

54
DISPLAY CONTROL UNIT

60
OPERATION CONTROL UNIT

DATA PROCESSING UNIT

48

BREAKAGE TIME STRESS STORAGE UNIT 64

STORAGE UNIT

# FIG. 3

START

ACQUIRE SET VALUE  S10

ESTIMATE STRESS  S12

STRESS ≥ FIRST THRESHOLD VALUE?  S14

N

Y

ISSUE ALARM  S16

END

# FIG. 4

```
          ┌─────────────┐
          │    START    │
          └──────┬──────┘
                 │
      ┌──────────▼──────────┐  S20
      │  RECEIVE DATA RELATING TO
      │       BUBBLE        │
      └──────────┬──────────┘
                 │
      ┌──────────▼──────────┐  S22
      │   ESTIMATE STRESS   │
      └──────────┬──────────┘
                 │
            ◇ S24 ◇
      STRESS ≥ SECOND
      THRESHOLD VALUE?
                 │ Y
      ┌──────────▼──────────┐  S26
      │     ISSUE ALARM     │
      └──────────┬──────────┘
                 │
            ◇ S28 ◇
      IS MOLDING
   N  COMPLETED?
                 │ Y
          ┌──────▼──────┐
          │     END     │
          └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017177348 A
- US 5104593 A
- US 5891383 A
- US 6293778 B1
- JP H07117101 A
- JP H05345353 B